# FASCICULE DE BREVET EUROPEEN

(11) **EP 2 852 921 B1**
(45) Date de publication et mention de la délivrance du brevet: **10.08.2016**
(21) Numéro de dépôt: 13724257.4
(22) Date de dépôt: 21.05.2013
(51) Int. Cl.: G06K 19/073, G06K 19/07

(54) **PROCÉDÉ ET CARTE À PUCE POUR TRANSMETTRE DES INFORMATIONS**
VERFAHREN UND CHIPKARTE FÜR DIE ÜBERTRAGUNG VON INFORMATIONEN
METHOD AND SMART CARD FOR THE TRANSMISSION OF INFORMATION

(30) Priorité: 23.05.2012 FR 1254701
(43) Date de publication de la demande: 01.04.2015
(73) Titulaire: Morpho, 92130 Issy-les-Moulineaux (FR)
(72) Inventeur: BERTHIER, Maël, F-92130 Issy Les Moulineaux (FR); GONCALVES, Louis-Philippe, F-92130 Issy Les Moulineaux (FR); LECOCQ, François, F-92130 Issy Les Moulineaux (FR); PEPIN, Cyrille, F-92130 Issy Les Moulineaux (FR)
(74) Mandataire: Le Guen-Maillet
(86) Numéro de dépôt international: PCT/EP2013/060375
(87) Numéro de publication internationale: WO 2013/174796

(56) Documents cités:
- WO-A1-01/71658
- FR-A1- 2 863 745

## Description

La présente invention concerne le domaine des cartes à puce et plus particulièrement une carte dotée de moyens de transmission de données utilisant des canaux de transmission annexes.

Les cartes à puce connaissent un état dit de « fin de vie » où il n'est plus possible en théorie d'utiliser la carte. La carte se trouve dans cet état suite à une anomalie ou à une attaque. La carte se bloque et refuse tout fonctionnement, afin de conserver l'intégrité des données sensibles qu'elle contient et de s'assurer qu'elles ne sont pas dérobées.

Néanmoins, il serait avantageux de pouvoir connaître le problème à l'origine du passage de la carte dans cet état de fin de vie.

Or, la carte étant bloquée, il n'est pas possible de communiquer avec elle. De plus, la cause du blocage de la carte pouvant être une attaque, il est important de ne pas compromettre les données sensibles potentiellement contenues dans la carte.

L'invention vise à résoudre les problèmes précédents par un procédé de transmission de données par une carte à puce en fin de vie utilisant des canaux de communication cachés différents des canaux de communication standards de la carte. Les données sont transmises par la modulation d'un signal binaire qui résulte de la modification d'un paramètre matériel de la carte.

De cette manière, la carte dispose d'un moyen d'émission d'une information d'état par un canal strictement monodirectionnel qui n'amoindrit en rien la sécurité de la carte.

L'invention concerne une carte à puce qui comprend des moyens de transmettre des données utilisant un canal de transmission annexe défini par le fait d'utiliser la modification contrôlée d'une caractéristique matérielle de la carte détectable depuis l'extérieur de la carte.

Selon un mode particulier de réalisation de l'invention, elle est contrôlée par un premier système d'exploitation dédié au contrôle de la carte lors de son fonctionnement normal, et elle comporte un second système d'exploitation dédié au contrôle de la transmission de données par des canaux annexes.

Selon un mode particulier de réalisation de l'invention, elle comporte un module de démarrage permettant d'aiguiller le contrôle vers le second système d'exploitation lorsque la carte est marquée comme étant en fin de vie et vers le premier système sinon.

Selon un mode particulier de réalisation de l'invention, ledit second système comporte des moyens d'émettre via le canal annexe des données stockées dans un espace de mémoire partagé entre le premier et le second système.

Selon un mode particulier de réalisation de l'invention, le premier système comprend des moyens pour, lorsque la carte passe en fin de vie, recopier des données destinées à être transmises depuis un espace mémoire privé du premier système vers l'espace mémoire partagé entre les deux systèmes.

Selon un mode particulier de réalisation de l'invention, le premier système comprend en outre des moyens de chiffrement des données recopiées destinées à être transmises.

Selon un mode particulier de réalisation de l'invention, le premier système comprend en outre des moyens de vérifier l'intégrité des données recopiées destinées à être transmises.

Selon un mode particulier de réalisation de l'invention, ledit canal annexe utilise un codage basé sur l'utilisation d'une même instruction en modifiant la fréquence d'horloge d'exécution pour modifier la quantité de courant consommée par la carte lors de cette exécution.

Selon un mode particulier de réalisation de l'invention, ledit canal annexe utilise un codage basé sur l'utilisation d'instructions du coprocesseur cryptographique pour modifier les champs électromagnétiques émis par ce coprocesseur permettant la détection de son utilisation.

L'invention concerne également un procédé de démarrage d'une carte à puce qui comporte :
- une étape de lancement d'un module de démarrage lors de la mise sous tension de la carte ;
- une étape de test pour déterminer si la carte est marquée comme étant en fin de vie ;
- une étape de passage du contrôle à un premier système si la carte n'est pas marquée comme étant en fin de vie ;
- une étape de passage du contrôle à un second système si la carte est marquée comme étant en fin de vie ;
- une étape d'émission de données par ledit second système utilisant des canaux annexes définis par le fait d'utiliser la modification contrôlée d'une caractéristique matérielle de la carte détectable depuis l'extérieur de la carte.

Selon un mode particulier de réalisation de l'invention, l'étape d'émission de données par ledit second système utilisant des canaux annexes est répétée régulièrement tant que la carte est alimentée.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 illustre l'architecture d'une carte à puce selon l'art antérieur.
La Fig. 2 illustre l'architecture d'une carte à puce selon un exemple de réalisation de l'invention.
La Fig. 3 illustre le procédé de transmission selon un exemple de réalisation de l'invention.

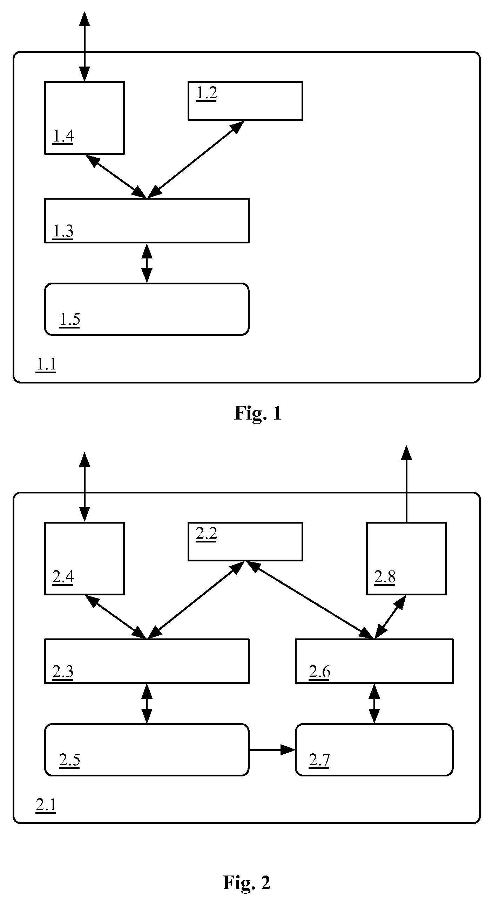

La Fig. 1 illustre l'architecture d'une carte à puce 1.1. La carte contient un module de démarrage 1.2 (*boot module* en anglais). Ce module est activé automatiquement lors de la mise sous tension de la carte. Ce module est chargé de vérifier l'état de la carte lors du démarrage. Il existe typiquement deux états possibles pour la carte. Un premier état est l'état de fonctionnement normal de la carte. Dans cet état, le module de démarrage passe le contrôle au système d'exploitation 1.3 qui anime la carte. Ce système d'exploitation 1.3 utilise au moins un espace de stockage de données 1.5. Il gère également un module d'entrées sorties 1.4 permettant les échanges de données avec l'environnement.

La carte peut également être dans un second état appelé état de fin de vie. Lorsque le module de démarrage reconnaît que la carte est dans cet état de fin de vie, il ne passe pas le contrôle au système d'exploitation. Il interrompt le fonctionnement de la carte.

Une carte fonctionnelle peut décider de passer en fin de vie pour un grand nombre de raisons. Il peut s'agir de la détection d'une attaque ou encore de la détection d'une panne. La procédure de passage en fin de vie comprend plusieurs étapes. Il s'agit de protéger les données sensibles contenues dans la carte. Pour ce faire, toutes les données effaçables sont effacées. Selon le matériel utilisé, il est généralement possible de bloquer l'accès à des pages mémoires en bloquant des plages d'adresses. Typiquement, toutes les plages d'adresses pouvant l'être sont bloquées. Les entrées sorties de la carte sont également bloquées. La carte est ensuite marquée comme étant en fin de vie. Ce marquage est typiquement réalisé par le stockage d'un drapeau (*flag* en anglais) en mémoire non volatile. Ce drapeau reste accessible au module de démarrage. C'est par ce biais que ce module de démarrage a connaissance de l'état de la carte.

La Fig. 2 illustre l'architecture de la carte selon un exemple de réalisation de l'invention. Cette architecture reprend les éléments de la Fig. 1 référencés avec les mêmes mineures. Elle contient un second système 2.6 ayant accès à un espace de stockage partagé 2.7 entre le premier et le second système. Le second système contrôle en outre un module d'entrées sorties 2.8. Ce second système est dédié à la transmission de données en utilisant un canal de transmission annexe de la carte géré par le module d'entrées sorties 2.8. Dans la présente description, un canal de transmission annexe est défini comme étant un canal de transmission de données utilisant la modification contrôlée d'une caractéristique physique de la carte, cette modification étant détectable et mesurable en intensité depuis l'extérieur de la carte. Cette caractéristique physique, également dite caractéristique matérielle ci-après, peut être l'énergie ou le courant électrique consommé par la carte elle-même, l'énergie portée par des ondes électromagnétiques ou sonores émises par la carte ou l'énergie thermique diffusée par la carte, ou toute forme d'énergie qui est émise par la carte. L'information transmise par ce canal de transmission annexe est codée sous la forme d'une modification contrôlée, détectable et mesurable depuis l'extérieur de la carte, d'une de ces caractéristiques physiques.

Lorsque la carte passe en fin de vie, des informations sont alors copiées depuis l'espace de stockage 2.5 dédié au premier système 2.3 vers l'espace de stockage partagé 2.7. Ces informations sont typiquement des informations d'état liées à la cause du passage en fin de vie. Il peut s'agir du module incriminé pour la détection d'une panne. Il peut également s'agir du type d'attaque détecté si la cause du passage en fin de vie est la détection d'une attaque. Il peut également s'agir de tout type d'information dont on souhaite disposer une fois la carte en fin de vie. Cette recopie d'informations, ainsi que son chiffrement éventuel, est typiquement la seule opération supplémentaire liée à l'invention intervenant lors du passage de la carte en fin de vie.

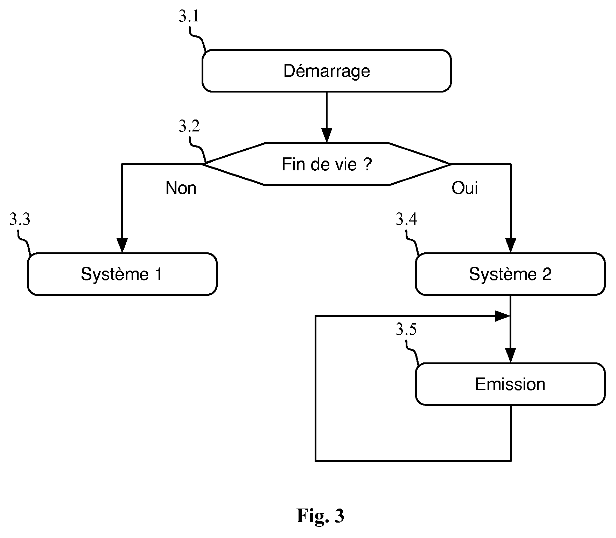

La Fig. 3 illustre le procédé de démarrage de la carte selon un exemple de réalisation de l'invention.

Lors d'une première étape 3.1 la carte démarre, typiquement suite à la mise sous tension de celle-ci. Le contrôle est automatiquement confié au module de démarrage. Celui-ci teste, lors d'une étape 3.2, si la carte est en fin de vie. Ce test s'effectue typiquement par la lecture du drapeau prévu à cet effet. Ce drapeau se trouve avantageusement dans l'espace de mémoire partagé de la carte.

Si la carte n'est pas en fin de vie, le contrôle est passé au premier système de la carte lors de l'étape 3.3. La carte fonctionne alors tout à fait normalement. Elle utilise le système normal d'entrées sorties pour communiquer avec l'extérieur.

Par contre, si la carte est en fin de vie, au lieu de s'interrompre, le module de démarrage passe le contrôle au second système lors d'une étape 3.4. Le but de ce second système est de transmettre les informations d'état stockées dans l'espace mémoire partagé vers l'extérieur. Cette transmission est effectuée sous la forme d'une émission des données via un canal de transmission annexe.

Avantageusement, l'émission des données se poursuit de manière régulière tant que la carte reste alimentée.

Selon un premier mode de réalisation de l'invention, la caractéristique matérielle utilisée pour le canal annexe est la consommation de courant de la carte. Dans ce mode de réalisation, il est possible de modifier par logiciel la fréquence d'horloge de fonctionnement du processeur de la carte. On peut alors utiliser une instruction choisie du processeur que l'on va appeler à différentes fréquences d'horloge pour coder une information binaire. Selon l'exemple de réalisation, l'instruction 'NOP' est utilisée. Cette instruction ne provoque aucun calcul. Toutefois, elle provoque une consommation de courant dépendant de la fréquence d'horloge sélectionnée. Il est à noter que la durée d'exécution de l'instruction dépend également de la fréquence sélectionnée, la durée du symbole codé également. Avantageusement, un état permet de coder un symbole intermédiaire introduit entre deux symboles binaires. Cela permet de distinguer facilement deux symboles successifs de même valeur.

Selon un autre mode de réalisation, la caractéristique matérielle utilisée est le fonctionnement du coprocesseur cryptographique. Les symboles sont codés sous la forme d'instructions qui utilisent, ou pas, le coprocesseur cryptographique. Un enregistrement des émissions électromagnétiques émises au voisinage de ce coprocesseur permet de récupérer un signal où l'information d'utilisation de ce coprocesseur apparaît.

Il est également possible d'utiliser la température de la carte, dès lors que certaines instructions sont connues pour provoquer un échauffement du processeur, d'autres moins. On peut aussi utiliser le son ou les champs électromagnétiques.

Le principe est que l'information est codée sous la forme d'une évolution détectable et contrôlée d'une caractéristique matérielle de la carte.

Il eut été possible d'utiliser les interfaces physiques de communication de la carte, mais cela aurait demandé d'implémenter un pilote complet de communication au sein du second système. Or, la solution adoptée peut être avantageusement implémentée à l'aide de quelques lignes de code seulement. Il suffit d'une boucle lisant les données à émettre et les codant sous la forme d'une suite d'instructions permettant de modifier la caractéristique physique choisie. La place mémoire dans une carte à puce étant limitée, cette sobriété est avantageuse.

Il faut aussi noter que la fin de vie pouvant être provoquée par une panne de la carte, plus les ressources utilisées pour implémenter le second système sont limitées et plus les chances qu'il soit opérationnel augmentent.

L'intérêt de cette proposition réside donc dans l'utilisation de ce protocole de communication en utilisant toutes modifications mesurables de l'environnement par la carte. Lié à l'utilisation d'un protocole de communication se trouve le fait que le code développé pour l'occasion est compact et est exécuté en dehors de tout code utilisé lors du fonctionnement normal de la carte. Ceci rend cette implémentation sûre d'un point de vue sécuritaire, car elle utilise un code dédié. On ne doit changer aucune des sécurités déjà présentes et celles-ci doivent fonctionner comme d'habitude pour parer à toute attaque extérieure.

Le canal de communication ainsi créé est strictement monodirectionnel. Cette caractéristique est importante d'un point de vue sécurité. Il n'est pas possible à un attaquant d'utiliser ce canal pour écrire une donnée dans la carte ou pour essayer de provoquer un comportement non désiré de celle-ci.

Seules les données préalablement sélectionnées et transférées dans l'espace mémoire partagé peuvent être émises. Le second système n'a aucun accès à l'espace mémoire géré par le premier système contenant potentiellement des données sensibles.

La présente invention sert principalement à effectuer un diagnostic permettant de comprendre quels sont les problèmes qui ont poussé la carte à passer en fin de vie. Dans ce cadre, et pour un exemple d'utilisation, il est tout à fait possible de chiffrer les données à envoyer lors du passage de la carte en fin de vie. Le mécanisme de chiffrement et la clé utilisée sont à choisir de façon judicieuse afin de conserver un bon niveau de sécurité. Avantageusement un mécanisme de vérification de l'intégrité des données est utilisé, typiquement une somme de contrôle de type CRC (*Cyclic Redundancy Check* en anglais). Quand la carte est dans l'état « en fin de vie » et qu'elle est alimentée, elle envoie par l'utilisation du mécanisme de la présente invention simplement les données déjà chiffrées qui sont stockées en mémoire non volatile.

Plus qu'une sécurité lors du passage en fin de vie d'une carte, ce mécanisme peut aussi être utilisé en tant que partie intégrante d'un protocole de communication et/ou procédé de sécurité.

Par exemple, lors de l'authentification d'une carte, cette dernière peut envoyer une information nécessaire au bon déroulement de l'authentification. Cela peut par exemple être un aléa ou un numéro de série. Il devient alors plus difficile pour un attaquant de voir et comprendre les informations transmises par ce biais. Compte tenu de leur fonction, les terminaux peuvent posséder des moyens de suivre la consommation de la carte. Si cette dernière consomme trop à un moment donné, cela peut être considéré comme une attaque et peut bloquer la carte. Ces défauts sont surtout repérables lors de l'utilisation de cartes contrefaites. Ainsi, dans un protocole accordé entre le terminal et la carte, une consommation supérieure pour envoyer un message à un moment bien précis peut être utilisée dans le cadre d'une authentification là où une telle consommation aurait normalement bloqué la carte. Il s'agit là d'un moyen d'offrir une meilleure sécurité à la carte et au terminal qui communiquera avec.

Dans ce mode de réalisation, le canal de données annexe est utilisé par le premier système lors du fonctionnement normal de la carte. Ce fonctionnement est alors fait parallèlement à un fonctionnement normal et à l'utilisation des canaux de transmission normaux de la carte à puce.

Selon le canal annexe utilisé, le fonctionnement normal et l'émission de données doivent être exclusifs à un instant donné pour éviter que les perturbations de la caractéristique matérielle choisie provoquées par le fonctionnement normal de la carte ne viennent perturber l'émission des données via le canal annexe.

L'invention décrite dans le domaine des cartes à puce concerne également tous les dispositifs de traitement de l'information utilisant des puces du type carte à puce. On peut citer, par exemple, des dispositifs de clés USB contenant une telle puce ou encore des téléphones utilisant une carte SIM (*Subscriber Information Module* en anglais).

## Revendications

1. Carte à puce, comprenant un premier système d'exploitation dédié au contrôle de la carte lors de son fonctionnement normal et un second système d'exploitation dédié au contrôle de la transmission de données par au moins un canal annexe, **caractérisée en ce que** la carte à puce comporte en outre :
- un module de démarrage permettant d'aiguiller le contrôle de la carte à puce vers ledit second système d'exploitation lorsque la carte est marquée comme étant dans l'état "fin de vie" et vers ledit premier système d'exploitation sinon,
- ledit canal de transmission annexe utilisant une modification mesurable de l'environnement de ladite carte pour la transmission de données relatives à des informations dudit état "fin de vie".

2. Carte à puce selon la revendication 1, **caractérisée en ce que** ledit second système comporte des moyens pour émettre via le canal annexe lesdites données d'état "fin de vie" stockées dans un espace de mémoire partagé entre le premier et le second systèmes d'exploitation.

3. Carte à puce selon la revendication 2, **caractérisée en ce que** le premier système comprend des moyens pour, lorsque la carte passe dans l'état "fin de vie", recopier lesdites données d'état destinées à être transmises depuis un espace mémoire privé du premier système d'exploitation vers l'espace mémoire partagé entre les deux systèmes d'exploitation.

4. Carte à puce selon la revendication 3, **caractérisée en ce que** le premier système comprend en outre des moyens de chiffrement desdites données d'état recopiées destinées à être transmises.

5. Carte à puce selon la revendication 3 ou 4, **caractérisée en ce que** le premier système comprend en outre des moyens de vérifier l'intégrité desdites données d'état recopiées destinées à être transmises.

6. Carte à puce selon l'une des revendications 1 à 5, **caractérisée en ce que** ledit canal annexe utilise le courant consommé par ladite carte pour coder lesdites informations dudit état "fin de vie" en données binaires.

7. Carte à puce selon la revendication 6, **caractérisé en ce qu'**elle comporte des moyens pour coder lesdites informations dudit état "fin de vie" en données binaires en modifiant la fréquence d'horloge de l'exécution d'une même instruction, ce qui modifie la quantité de courant alors consommée par ladite carte lors de cette exécution.

8. Carte à puce selon l'une des revendications 1 à 5, **caractérisée en ce que** ledit canal annexe utilise les champs électromagnétiques émis par ladite carte pour coder lesdites informations dudit état "fin de vie" en données binaires.

9. Carte à puce selon la revendication 8, **caractérisée en ce qu'**elle comporte des moyens pour coder lesdites informations dudit état "fin de vie" en données binaires en utilisant des instructions d'un coprocesseur cryptographique que comporte ladite carte, ce qui modifie les champs électromagnétiques émis par ce coprocesseur.

10. Procédé de démarrage d'une carte à puce, **caractérisé en ce qu'**il comporte :
- une étape de test pour déterminer si la carte est marquée comme étant dans un état "fin de vie" ;
- une étape de passage du contrôle à un premier système d'exploitation dédié au contrôle de la carte lors de son fonctionnement normal, si la carte n'est pas marquée comme étant dans un état "fin de vie" ou si la carte est marquée comme étant dans un état "fin de vie",
- une étape de passage du contrôle à un second système dédié au contrôle de la transmission de données relatives à des informations dudit état "fin de vie" par au moins un canal annexe; ledit canal de transmission annexe utilisant une modification mesurable de l'environnement de ladite carte pour la transmission des données relatives à des informations dudit état "fin de vie".

11. Procédé selon la revendication 10, **caractérisé en ce que** l'étape de passage du contrôle audit second système d'exploitation est répétée régulièrement tant que la carte est alimentée.

## Patentansprüche

1. Chipkarte umfassend ein, der,Kartenkontrolle bei normaler Funktionsweise derselben gewidmetes erstes Betriebssystem und ein, der Kontrolle der Datenübertragung auf wenigstens einem Nebenkanal gewidmetes zweites Betriebssystem, **dadurch gekennzeichnet, dass** die Chipkarte zudem folgendes beinhaltet :
- ein Startmodul, das die Umleitung der Chipkartenkontrolle auf das genannte zweite Betriebssystem gestattet, wenn die Karte als sich in dem Zustand des « erreichten Endes der Lebensdauer» befindlich markiert ist und ansonsten die Chipkartenkontrolle auf das genannte erste Betriebssystem geleitet wird,
- wobei der genannte Nebenübertragungskanal eine messbare Änderung der Umgebung der genannten Chipkarte für die Übertragung von Daten über Informationen betreffend den genannten Zustand des «erreichten Endes der Lebensdauer» nutzt.

2. Chipkarte nach Patentanspruch 1, **dadurch gekennzeichnet, dass** das genannte zweite Betriebssystem Mittel umfasst, um die genannten Daten betreffend den Zustand des « erreichten Endes der Lebensdauer», die in einem gemeinsam vom ersten und zweiten Betriebssystem genutzten Speicherplatz abgelegt sind, über den Nebenkanal auszusenden.

3. Chipkarte nach Patentanspruch 2, **dadurch gekennzeichnet, dass** das erste Betriebssystem Mittel umfasst, um die genannten Zustandsdaten, die dazu bestimmt sind, von einem privaten Speicherplatz des ersten Betriebssystems zu dem, von den beiden Betriebssystemen genutzten Speicherplatz übertragen zu werden, zu kopieren, wenn die Chipkarte in den Zustand des «erreichten Endes der Lebensdauer» übergeht.

4. Chipkarte nach Patentanspruch 3, **dadurch gekennzeichnet, dass** das erste Betriebssystem zudem Mittel zur Verschlüsselung der genannten kopierten, zur Übertragung bestimmten Zustandsdaten umfasst.

5. Chipkarte nach Patentanspruch 3 oder 4, **dadurch gekennzeichnet, dass** das erste Betriebssystem zudem Mittel zur Überprüfung der Integrität der genannten kopierten, zur Übertragung bestimmten Zustandsdaten umfasst.

6. Chipkarte nach einem der Patentansprüche 1 bis 5, **dadurch gekennzeichnet, dass** der genannte Nebenkanal den, von der genannten Chipkarte gezogenen Strom nutzt, um die genannten Informationen über den Zustand des « erreichten Endes der Lebensdauer » in Binärdaten zu verschlüsseln.

7. Chipkarte nach Patentanspruch 6, **dadurch gekennzeichnet, dass** sie Mittel umfasst, um die genannten Informationen über den Zustand des «erreichten Endes der Lebensdauer» durch Änderung der Taktfrequenz der Ausführung eines selben Befehls in Binärdaten zu verschlüsseln, wodurch sich die Quantität des dann von der genannten Chipkarte während dieser Befehlsausführung gezogenen Stroms verändert.

8. Chipkarte nach einem der Patentansprüche 1 bis 5, **dadurch gekennzeichnet, dass** der genannte Nebenkanal die, von der genannten Karte ausgesandten elektromagnetischen Felder zur Verschlüsselung der genannten Informationen über den Zustand des «erreichten Endes der Lebensdauer» in Binärdaten nutzt.

9. Chipkarte nach Patentanspruch 8, **dadurch gekennzeichnet, dass** sie Mittel umfasst, um die genannten Informationen über den Zustand des «erreichten Endes der Lebensdauer» in Binärdaten zu verschlüsseln, indem sie die Befehle eines, in ihr beinhalteten kryptografischen Zusatzprozessors nutzt, wodurch die, von diesem Zusatzprozessor ausgesandten elektromagnetischen Felder verändert werden.

10. Startverfahren einer Chipkarte, **dadurch gekennzeichnet, dass** es folgendes umfasst:
- einen Testschritt, um zu bestimmen, ob die Chipkarte als sich im Zustand des "erreichten Endes der Lebensdauer" befindlich markiert ist;
- einen Schritt des Umleitens der Kontrolle auf ein, der Chipkartenkontrolle bei normaler Funktionsweise derselben gewidmetes erstes Betriebssystem, wenn die Chipkarte nicht als sich im Zustand des «erreichten Endes der Lebensdauer» befindlich markiert ist,
- einen Schritt des Umleitens der Kontrolle auf ein, der Kontrolle der Übertragung von Daten über Informationen betreffend den Zustand des «erreichten Endes der Lebensdauer» gewidmetes zweites Betriebssystem über wenigstens einen Nebenkanal, wobei der Nebenübertragungskanal eine messbare Änderung der Umgebung der genannten Karte für die Übertragung der, sich auf den genannten Zustand des «erreichten Endes der Lebensdauer» beziehenden Daten nutzt.

11. Verfahren nach Patentanspruch 10, **dadurch gekennzeichnet, dass** sich der Schritt des Umleitens der Kontrolle auf das genannte zweite Betriebssystem regelmäßig wiederholt, solange die Karte gespeist wird.

## Claims

1. A chip card, comprising a first operating system dedicated to the control of the card during normal functioning and a second operating system dedicated to control the transmission of data by at least one annex channel, wherein the chip card further comprises:
- a boot module for switching control of the chip card to the second operating system when the card is marked as being in the "end of life" state and to said first operating system otherwise;
- said annex transmission channel using a measurable modification of the environment of said card for the transmission of data relating to information on said "end of life" state.

2. The chip card of claim 1, wherein that said second operating system comprises means for sending, via the annex channel, said "end of life" state data stored in a memory space shared between the first and second operating systems.

3. The chip card of claim 2, wherein the first operating system comprises means for, when the card goes into the "end of life" state, copying said state data intended to be transmitted from a private memory space of the first operating system to the memory space shared between both operating systems.

4. The chip card of claim 3, wherein the first operating system also comprises means for enciphering said copied state data intended to be transmitted.

5. The chip card of claim 3 or 4, wherein the first operating system further comprises means for checking the integrity of said copied state data intended to be transmitted.

6. The chip card of one of claims 1 to 5, wherein said annex channel uses the current consumed by said card for coding said information on said "end of life" state in binary data.

7. The chip card of claim 6, wherein it comprises means for coding said information on said "end of life" state in binary data by modifying the clock frequency of the execution of a same instruction, which modifies the quantity of current then consumed by said card during such execution.

8. The chip card of one of claims 1 to 5, wherein said annex channel uses the electromagnetic fields emitted by said card for coding said information on said "end of life" state in binary data.

9. The chip card of claim 8, wherein it comprises means for coding said information on said "end of life" state in binary data using instructions of a cryptographic coprocessor that said card has, which modifies the electromagnetic fields emitted by this coprocessor.

10. A method for booting a chip card, comprising:
- a test step for determining whether the card is marked as being in an "end of life" state;
- a step of passing control to a first operating system dedicated to control of the card during its normal functioning if the card is not marked as being in a "end of life" state or if the card is marked as being in an "end of life" state;
- a step of passing control to a second operating dedicated to the control of the transmission of the data relating to information on said "end of life" state by at least one annex channel; said annex transmission channel using a measurable modification of the environment of said card for transmitting data relating to information on said "end of life" state.

11. The method of claim 10, wherein the step of passing control to said second operating system is repeated regularly as long as the card is powered up.
